# EUROPEAN PATENT APPLICATION

(11) **EP 4 253 788 A2**
(43) Date of publication of application: **04.10.2023**
(21) Application number: 23191435.9
(22) Date of filing: 16.09.2019
(51) Int. Cl.: F16F 1/26

(54) **AIR-SPRUNG WHEEL AXLE SUSPENSION OF A VEHICLE WITH AND BEARING BRACKET FOR A TRAILING ARM HAVING A HAMMERHEAD**

(30) Priority: 17.09.2018 NL 2021646
(62) Divisional of application: 19787106.4
(71) Applicant: VDL Weweler B.V., 7325 WC Apeldoorn (NL)
(72) Inventor: AALDERINK, Derk Geert, 7245 NV LAREN (NL); SCHRIER, Tom, 7323 RL APELDOORN (NL); BRUINJA, Marten Frank Ciarán, 7545 VV ENSCHEDE (NL)
(74) Representative: EP&C

(57) **Abstract**

An air-sprung wheel axle suspension of a vehicle for suspending a wheel axle from a vehicle chassis comprises a bearing bracket, a trailing arm and an air spring. The bearing bracket is rigidly attached to the vehicle chassis and comprises a pair of opposing spaced apart lateral plates. The trailing arm is secured to the axle body of the vehicle and has a front end portion that is pivotably attached to the bearing bracket. The air spring is operatively arranged between the vehicle chassis and the trailing arm, at a distance rearward from the front end portion. The trailing arm has a hammerhead configuration at the front end portion and at least one of the lateral plates of the bearing bracket has a receiving recess configured to receive a part of the hammerhead configuration. In a mounted state of the suspension the hammerhead configuration is received and supported in the receiving recess, such that the front end portion of the trailing arm is able to pivot with respect to the bearing bracket.

## Description

The invention relates to an air-sprung wheel axle suspension of a vehicle for suspending a wheel axle from a vehicle chassis, the suspension comprising a bearing bracket, a trailing arm and an air spring, wherein:
- the bearing bracket is rigidly attached to the vehicle chassis and comprises a pair of opposing spaced apart lateral plates,
- the trailing arm is secured to the axle body of the vehicle, said trailing arm having a front end portion that is pivotably attached to the bearing bracket,
- the air spring is operatively arranged between the vehicle chassis and the trailing arm, at a distance rearward from the front end portion.

WO 2009/014423 discloses an air-sprung wheel axle suspension for a vehicle, wherein a bearing bracket is rigidly attached to the vehicle chassis and wherein a trailing arm is pivotably connected to the bearing bracket at a front end of the trailing arm. The trailing arm is further clamped against an axle body with clamping means, and the suspension comprises an air spring which is operational between the trailing arm and the vehicle chassis. The trailing arm extends substantially in the longitudinal direction of the vehicle. The wheel axle body is arranged in a transverse vehicle direction, substantially perpendicular to said longitudinal vehicle direction. The trailing arm of WO 2009/014423 comprises a securing eyelet at its front end. The bracket has two openings at two opposing sides of the bearing bracket. The openings align in a direction transverse to the longitudinal axis of the vehicle. The securing eyelet of the trailing arm is in the mounted state arranged in the bearing bracket and in line with the openings. This allows a pivot bolt to pivotably attach the trailing arm and the bearing bracket together, the trailing arm being able to pivot with respect to the bearing bracket.

As the suspension is a critical part of the vehicle, it must be firmly secured to both the wheel axle and the vehicle chassis. The bracket of the suspension of WO 2009/014423 is rigidly connected to the vehicle chassis, e.g. by welding or with bolts, and the eyelet of the trailing arm is firmly secured between the plates of the bearing bracket. As the eyelet must be able to pivot, it can however not be clamped between the bearing bracket. Therefore, in general a metal bushing lined with a rubber layer at the outside is provided in the eyelet. The pivot bolt extends through the securing eyelet. The bushing and the eyelet both have a width, measured in the transverse vehicle direction, wherein the width of the bushing is somewhat larger than the width of the eyelet. The bushing, in a mounted state of the suspension, is rigidly clamped between the lateral plates of the bearing bracket, with the pivot bolt passing through the bushing and the opposing openings in the bearing bracket, to secure the trailing arm with respect to the bracket. The eyelet is then able to rotate with respect to the metal bushing, as a result of which the trailing arm is able to pivot with respect to the vehicle chassis.

A problem of such a pivot arrangement is that the trailing arm has two principle degrees of freedom: a desired rotational, pivoting movement with respect to the vehicle chassis and an undesired transverse movement of the trailing arm eyelet, along the longer bush, because the length of the bush exceeds the width of the arm, measured at the location of the eyelet. This can cause the eyelet to collide with the plates in the transverse direction and cause an impact on the lateral plates. These impacts have to be absorbed by lateral strut structures.

A further problem of such a pivot arrangement is that the procedure of aligning the trailing arm with respect to the bearing bracket and the chassis and fixing the bush, by installing and tightening a pivot bolt, is a critical procedure regarding the vehicle safety that is relatively complicated, requiring special tools and some training. The pivot bolt should for example be tightened with a certain, pre-defined torque. The installation of such a suspension comprising a securing eyelet and a pivot bolt can therefore only be done reliably by the manufacturer of the suspension and in a limited amount of workshops, where engineers have a sufficient knowledge of the suspension system. This can lead to a long repair time and high costs when non-scheduled repairs are necessary to the pivot arrangements of such a suspension.

It is an object of the present invention to provide an air-sprung wheel axle suspension with an alternative pivot arrangement between the bearing bracket and the trailing arm.

Therefore, an air-sprung wheel axle suspension for a vehicle is provided according to the preamble of claim 1, wherein the trailing arm has a hammerhead configuration at the front end portion, and wherein at least one of the lateral plates of the bearing bracket has a receiving recess configured to receive a part of the hammerhead configuration, wherein said hammerhead configuration, in a mounted state of the suspension, is received and supported in the receiving recess, such that the front end portion of the trailing arm is able to pivot with respect to the bearing bracket.

Using the axis definition as described above, wherein the trailing arm of the suspension principally extends in a longitudinal direction of the vehicle, and wherein the vehicle axle is arranged in a transverse direction of the vehicle, the bearing bracket is arranged in front of the axle body when viewed in a normal driving direction of the vehicle. The trailing arm according to the invention has a front end portion configured as a hammerhead. The hammerhead configuration is wider, in a direction transverse to said longitudinal direction, than the trailing arm portion that adjoins the front end portion and which in a mounted state is located arranged between the lateral plates of the bearing bracket. At least one of the lateral plates of the bearing bracket has a receiving recess, configured to receive, in a mounted state, at least a part of the hammerhead. In this mounted state, the bearing bracket is fixed to the vehicle chassis and has no freedom to move with respect to the vehicle chassis. The hammerhead of the trailing arm, in said mounted state, functions essentially as a pivot pin and is able to rotate within the receiving recess around a pivot axis defined by the hammerhead. The hammerhead has thus at least one degree of freedom with respect to the receiving recess and the vehicle chassis, which is rotation about the pivot axis. Thus the trailing arm is able to pivot with respect to the vehicle chassis, whereby the axle body, which is secured to the trailing arm, is able to move towards or away from the vehicle chassis.

A particular advantage of the air-sprung wheel axle suspension according to the invention, is that it is relatively more easy to install the suspension system to the vehicle chassis. Where the system of WO 2009/014423, and all or virtually all other known air-sprung suspension systems, are installed with a bushing and a pivot bolt, the suspension according to the invention allows the hammerhead of the trailing arm to first be inserted into the (pre-formed) receiving recesses, after which the opposing lateral plates are mounted to each other, e.g. by tightening them together by bolts and nuts, to form a bearing bracket. The suspension manufacturer can supply the suspension in its assembled or mounted state, in which all critical parts are assembled with the correct torques and according to a correct and verified procedure. The trailer manufacturer only needs to mount the bearing bracket to the vehicle chassis.

In the air sprung wheel axle suspension according to the present invention, the trailing arm is pivotally mounted to the bearing bracket without the use of a pivot bolt. Therefore the trailer manufacturer is not bothered with the critical installation of a pivot bolt and nut to mount the trailing arm to the bearing bracket. Advantageously, the procedure of assembling the suspension according to the invention is in general more simple than attaching the eyelet of a trailing arm between a bearing bracket with a bushing and a pivot bolt.

A further advantage of providing an air-sprung wheel axle suspension for a vehicle comprising a trailing arm with a hammerhead configuration and bearing bracket plate with a receiving recess, is that the pivot arrangement of this suspension can be lighter in weight than a pivot arrangement of a suspension as known in the art. The trailing arm itself, with a hammerhead configuration, may be lighter than a trailing arm with a securing eyelet. Furthermore, weight is saved by omitting the need for a bushing and a pivot bolt. This can lead to a lower overall system weight of the suspension.

In a preferred embodiment of the suspension according to the invention the hammerhead configuration comprises two opposite journal portions extending transversely with respect to a longitudinal axis of the trailing arm, wherein each of the lateral plates has a receiving recess, and wherein the journal portions are received in the respective receiving recesses of the bearing bracket. The journal portions are preferably rotationally symmetric. The respective journal portions are able to rotate within the respective mutually aligned receiving recesses of the bearing bracket plates. Advantageously this structure provides a minimum amount of friction between the hammerhead and the receiving cavities, leading to less wear.

In a practical embodiment the journal portions are integrally formed on the front end portion of the trailing arm. A trailing arm with an integrally formed hammerhead configuration may be formed by for example forging, or another suitable forming method.

In another practical embodiment the journal portions are separate parts which are interconnected with the front end portion of the trailing arm. This has the advantage that the trailing arm may be of a simpler design and may be formed by a forming process most suitable for providing the trailing arm with the required mechanical properties. For example for a flexible trailing arm, having a parabolic thickness taper a rolling process is a suitable and common forming process. The journal portions can then be made by separately by another forming method, for example forging. The front end portion of the trailing arm than only needs to be worked such that a connection between the front end portion and the journal portions can be established during the assembly of the trailing arm. This is in general less complex than forming the trailing arm in a suitable forming process such as rolling, and then forming the front end portion of the trailing arm by another forming method, e.g. forging.

In a possible embodiment the journal portions are connected with the front end portion of the trailing arm in an interlocking manner.

In a practical embodiment each of the journal portions has at least one interlocking protrusion and the front end portion of the trailing arm has at least one corresponding recess formed in it to interlock the journal portion and the front end portion of the trailing arm. The front end portion may for example be provided with one or more recesses on either lateral side and the journal portions may be formed with mating protrusions such that the protrusions can be form fitted with the corresponding recesses. Thereby a simple assembly is warranted while the required interlocking in the rotational direction of the pivot arrangement is provided.

It is also possible, in another embodiment, that the journal portions are connected with the front end portion of the trailing arm in a non-positively locking manner (i.e. a force fitting manner). In this embodiment the journal portions are preferably connected with the front end portion of the trailing arm by a bolt or screw connection.

In a possible embodiment of the wheel axle suspension according to the invention the respective lateral plates of the bearing bracket comprise a journal housing, wherein the receiving recess is defined by said journal housing. The journal housings function as a support for the respective journals and allow rotation of the journals. By providing journal housings in the lateral plates, the loads subjected by the hammerhead is distributed over more material, leading to a more reliable and a stronger pivot arrangement.

Preferably the journal housing is formed integrally in the lateral plate of the bearing bracket. This allows for a simple manufacturing and assembly of the suspension. A substantially flat plate can for example be processed, e.g. with a forming press, to obtain a protruding journal housing defining a receiving recess for the hammerhead forming journals of the trailing arm. When the journal housing is formed integrally in the lateral plate, this will typically result in a uniformly strong bracket plate.

However, another embodiment may be envisaged in which the journal housing is formed as a separate part and the lateral plates of the bearing bracket each have an aperture, wherein the journal housing extends through said aperture and is attached to the corresponding plate. According to this embodiment, the lateral plates of the bearing bracket can for example be plates comparable to the ones known in the art, used in combination with a trailing arm comprising a securing eyelet. An aperture in a conventional bracket plate is not able to sufficiently support the hammerhead of the trailing arm. When a trailing arm with a hammerhead would be used to suspend a vehicle in combination with such a known bracket plate, unwanted stress concentrations would occur at the edges that define these apertures. Therefore, a journal housing formed as an insert with an open end can be provided, the insert extending outwardly in transverse direction with respect to the plate through said aperture, in a mounted state of the insert. The journal portions of the hammerhead can then be received inside the open ends of said insert, the hammerhead journals being supported by the outwardly extending portion of the insert that forms the receiving cavity. The insert provides additional support for the hammerhead and lowers the stress concentrations at the edge of the aperture in the bracket plates by spreading the stress over a larger area and more material.

In a further embodiment having a separately formed journal housing, the journal housing may have a flange formed around the open end on an outer side of the journal housing, wherein the journal housing is attached to the lateral plate of the bearing bracket at the flange. The journal housing may be attached to the plate at the flange, for example by welding, by adhesive bonding, with rivets, with bolts and nuts, or with other suitable fasteners.

In a preferred embodiment the journal housing bulges out with respect to the main plane of the lateral plate in a direction away from the trailing arm, i.e. outwards. This has the particular advantage that the main plate areas of the lateral plates can be relatively close to each other, or even in abutment with each other, making it relatively easy to rigidly secure the main plates of the lateral plates to each other, enhancing the strength of the pivot arrangement.

However, in another possible embodiment the journal housing may bulge out with respect to the main plane of the lateral plate in a direction towards the trailing arm, i.e. inwards.

Preferably the journal housing in the respective lateral plates is substantially cup-shaped having a closed end and an opposite open end. This allows that the lateral plates and the journal housings can be tightened around the journal portions with sufficient pressure. The closed end provides that a sufficient pressure can be applied on the journal portions in the lateral direction of the trailing arm. Thereby the hammerhead configuration can be retained well in position in the transverse direction of the vehicle. This obviates the problem of the current trailing arms in which the eyelet may shift slightly within the bearing bracket in transverse direction and collide with the lateral plates of the bearing bracket, which makes heavier strut structures necessary to support the bearing bracket in lateral direction. When the front portion of the trailing arm is laterally locked in, a significantly lighter strut structure may be used to support the bearing brackets, which leads to a weight saving on the vehicle.

Moreover such a closed outer surface of the journal housing optimally shields the hammerhead from the environment, preventing dirt and water from entering and obstructing the pivoting movement of the hammerhead inside the receiving cavities.

Preferably the journal housings have a (frusto-)conical shape. The conical shape provides that the lateral plates can be tightened towards each other and the journal portions will be centered. The conical shape obviates the problem of manufacturing tolerances in the bearing bracket plates and in the hammerhead configuration of the trailing arm.

In another possible embodiment the journal housings may have at least partially a spherical shape.

In another embodiment the journal portions are at least partially hollow. By making the hammerhead of the trailing arm partially hollow, weight can be saved.

In a possible embodiment of the suspension according to the invention the journal portions have a cylindrical outer surface.

In a preferred embodiment the journal portions have a tapering, in particular a (frusto-)conical outer surface.

In a possible embodiment of the suspension according to the invention an elastomer element is arranged between an outer surface of each one of the journal portions and an inner surface of the corresponding journal housing. By providing an elastomer element, for example a resilient ring, for example between outer surfaces of the opposing journal portions and inner surfaces of the corresponding journal housings, a compliancy is introduced in this pivot structure which may reduce wear and friction between parts. Furthermore, the elastomer element provides an isolation of vibration of the journal portions in the journal housings. An increased lifetime of the parts may be the result.

The elastomer element may be readily given a pretension, especially when it has a conical or partly spherical shape in correspondence with a (frusto-)conical or spherical shape of the journal portion and/or the journal housing, by tightening the lateral plates of the bearing bracket towards each other and compressing the elastomer element between the journal portion and the journal housing. By giving the elastomer element a pretension the compliancy of the initially flexible elastomer element may be reduced.

Another effect of the elastomer element is that manufacturing tolerances in the journal portions of the trailing arm and in the journal housings of the bearing bracket may be compensated. In particular if the journal portions and/or journal housings have a (frusto-) conical shape the hammerhead configuration of the trailing arm is confined in axial and radial direction of the journal portions, when the lateral plates of the bearing bracket are tightened towards each other. The rubber element allows slight movement of the journal portions in the journal housings.

In a possible further embodiment the elastomer element is provided on a metal support ring.

Preferably the elastomer element is provided on a metal, generally cup-shaped body.

Possibly the cup-shaped body has a corrugated bottom.

The support ring or the generally cup-shaped body is preferably made of sheet metal.

In a possible embodiment the elastomer element is vulcanized on the support ring or the generally cup-shaped body.

Instead of an elastomer element on a metal support ring or a cup shaped body the elastomer element may also be provided directly on the journal portion, in particular if the journal portion is a separate part to be connected with the front end of the trailing arm.

In an embodiment of the suspension according to the invention, the hammerhead configuration has a width, defined in a direction transverse to the longitudinal axis of the trailing arm, that is at least 10% larger than a width of the trailing arm portion that adjoins the hammerhead configuration.

The hammerhead configuration and the trailing arm can have many different shapes. The characterising feature of the hammerhead is that the hammerhead portion of the trailing arm projects in transverse direction, so to the left and to the right, with respect to the adjoining portion of the trailing arm. Normally, the width of the trailing arm is substantially constant.

In a possible embodiment according to the invention, the width of the trailing arm narrows between the portion where the trailing arm is connected to the axle body and the portion where the trailing arm is coupled with the bracket, the trailing arm being wider near the axle body portion than near the bracket portion, forming a necked trailing arm portion. Due to this necking shape of the trailing arm, embodiments are conceivable where the width of the hammerhead is smaller than the width of the trailing arm portion near the axle body, but where the hammerhead is wider than the width of the trailing arm at the necked portion.

In an embodiment of the suspension according to the invention, the receiving recesses have a depth relative to the corresponding lateral plate and are spaced apart by a distance and wherein the hammerhead configuration has a width, and wherein at least the depth of the receiving recesses, the distance between the receiving recesses, and the hammerhead width are matching, to prevent the hammerhead configuration, in the mounted state of the suspension, to move with respect to the receiving recesses in a transverse direction of the vehicle. Preventing the hammerhead configuration to move in a transverse direction with respect to the receiving cavities reduces the play between the trailing arm and the vehicle chassis, and thus between the wheel axle and the vehicle chassis, resulting in an improved suspension.

Known trailing arms with a securing eyelet, do not allow the securing eyelet to be directly clamped between the bearing bracket, as the trailing arm would then not be able to rotate with respect to the bearing bracket. The use of a bushing is required, as was described before, leading to an undesired degree of freedom for movement of the securing eye in the transverse direction. The pivot arrangement of the invention allows an outwardly protruding hammerhead portion to be received in a receiving cavity, securing the hammerhead configuration of the trailing arm with respect to the bearing bracket. As such, the transverse movement of the hammerhead in the receiving cavities can be prevented, while simultaneously allowing a pivoting motion. The outwardly projecting parts of the hammerhead can for example be clamped in the receiving recesses, with a relatively flexible elastomer compressed between the wall of the cavity and the hammerhead portion, where the width of the hammerhead, measured in the transverse direction of the trailing arm, matches the width of the receiving cavities, measured in the transverse direction of the trailing arm.

According to an alternative embodiment of the invention, the width of the hammerhead configuration is smaller than the width between the receiving cavities, an elastomer being arranged between an outer end of the hammerhead journal portions, seen in transverse direction and the bottom of the journal housing in the lateral plate that forms the receiving cavity. However, with the elastomer compressed in between these two ends, and thus having a certain pre-stress, transverse movement of the hammerhead configuration can still be limited.

The bearing bracket of the suspension is rigidly attached to the vehicle chassis. This attachment can be directly, where the bracket is rigidly attached to the vehicle chassis, for example by welding the bracket to the vehicle chassis, or by attaching the bracket to the vehicle chassis with bolts and nuts through aligning holes in the bracket and chassis. This attachment can also be indirectly, where for example a chassis mounting plate is rigidly attached to the chassis, the chassis mounting plate extending downwards with respect to the chassis, and where the bearing bracket is rigidly attached to the chassis mounting plate. When such an indirect attachment between the bracket and the vehicle chassis is arranged, the bracket is still, within the context of the present invention, said to be rigidly attached to the vehicle chassis, the chassis mounting plate, within the context of the present invention, forming a part of the vehicle chassis.

According to a possible embodiment of the suspension according to the invention, the plates of the bracket, in the mounted state of the suspension, are rigidly attached to a chassis mounting plate that is associated with the vehicle chassis and that extends downwards with respect to the vehicle chassis. The desired height between the suspension and the chassis of the vehicle can vary for different vehicles. When the bracket would be directly attached to the vehicle chassis, this would then require different brackets to be produced for different vehicles, more specifically, the height of the bracket should be adapted for different vehicle types. When instead a chassis mounting plate is provided between the vehicle chassis and the suspension bracket, this chassis mounting plate can be chosen to have the required height for different vehicle types and a common bracket size can be used for all vehicle types, resulting in a cheaper product. Thus, when a chassis plate is provided between the vehicle chassis and the suspension bracket, the bracket and trailing arm of the suspension can be assembled together, using a standard bracket and trailing arm. The assembly of bracket and trailing arm can then be rigidly attached to the chassis plate of the vehicle, wherein the chassis plate is of a height adapted to the specific vehicle type.

In a further embodiment of the suspension according to the invention, the bearing bracket and the chassis mounting plate each comprise at least two holes, the holes in the chassis mounting plate and the bearing bracket being aligned to allow the bearing bracket to be rigidly attached to the chassis mounting plate, e.g. with bolts and nuts, wherein at least the holes in the bearing bracket or the holes in the chassis mounting plate have a slot shape to allow aligning of the bearing bracket and the associated trailing arm and axle body. These slotted holes provide a margin of play to align the suspension with respect to the vehicle chassis. As such, production tolerances regarding the specifications of the trailing arm and/or the bearing bracket, more specifically tolerances in the dimensions of said trailing arm and/or bearing bracket can be compensated by (slightly) displacing the bracket and the chassis plate with respect to each other, using the slotted holes.

The lateral plates that form the bearing bracket of the suspension and the trailing arm of the suspension are principally two different products that, in use, are pivotably attached to each other and that, in cooperation, suspend a wheel axle body with respect to a vehicle chassis.

In the above is mainly referred to the preferred embodiment in which both lateral plates of the bearing bracket have a receiving recess and in which the hammerhead configuration of the trailing arm has two opposite journal portions. However, the invention also comprises an embodiment of the air-sprung wheel axle suspension, wherein one of the lateral plates has a receiving recess and the other one of the lateral plates has a bearing surface, wherein the hammerhead has one journal portion, wherein said journal portion is received in the receiving recess, and wherein a surface of the hammerhead portion opposite the journal portion bears against the bearing surface. In such an embodiment the "one sided" hammerhead and the bearing bracket are thus asymmetric with regard to a vertical longitudinal centre plane through the trailing arm. In such an embodiment the journal portion and the journal housing can be formed in the same way as is described in the above. The journal portion may thus for example be integrally formed with the front end portion of the trailing arm, but may also be a separately formed part which is assembled with the front end portion of the trailing arm, as is described in the above.

This invention not only relates to the combination of a bearing bracket and a trailing arm as set forth in clause 1, but also relates to these components individually.

As such, the invention also relates to a trailing arm of an air-sprung wheel axle suspension of a vehicle, the trailing arm being securable to an axle body of the vehicle, the trailing arm having a front end portion that can be pivotably attached to a bearing bracket, the trailing arm having a hammerhead configuration at the front end portion thereof, the hammerhead configuration being adapted to be received in receiving recesses formed in lateral plates of a bearing bracket of an air-sprung suspension, such that the hammerhead configuration, is able to pivot with respect to said receiving recesses.

As such, the invention also relates to a bearing bracket of an air-sprung wheel axle suspension of a vehicle, the bearing bracket being rigidly attachable to a vehicle chassis and comprising a pair of opposing spaced apart lateral plates, wherein the lateral plates of the bearing bracket each have at least one receiving recess configured to receive a part of a hammerhead configuration of a trailing arm, such that said hammerhead configuration is able to pivot with respect to said bearing bracket.

The installation of an air-sprung wheel axle suspension according to the invention typically differs from the installation procedure of suspensions as known in the art, such as the suspension of WO 2009/014423. For such known suspensions, the bearing bracket can be mounted to the chassis, after which a trailing arm comprising an eyelet is provided as a separate product, which trailing arm is then pivotably attached to the bracket by means of a pivot bolt. For the suspension according to the invention, this installation procedure is different. The bracket and the trailing arm are typically first assembled together to form one assembly, with the hammerhead configuration received in the opposing receiving recesses formed in the bearing bracket plates. The hammerhead is able to pivot with respect to the receiving recesses. This assembled unit of trailing arm and bearing bracket is then rigidly mounted to the chassis, or, in an alternative embodiment, to a chassis plate.

These and other aspects of the invention will be more readily appreciated as the same becomes better understood by reference to the following detailed description and considered in connection with the accompanying drawings in which like reference symbols designate like parts.

In the drawings:
Fig. 1 schematically shows a side view of an air-sprung wheel axle suspension for a vehicle according to the invention, attached to a vehicle chassis;
Fig. 2 schematically shows an isometric view of the wheel axle suspension of Fig. 1;
Fig. 3 schematically shows an isometric view of the wheel axle suspension of Fig. 1 with an exploded view of the bearing bracket;
Fig. 4 schematically shows an isometric view of a trailing arm of the air-sprung wheel axle suspension for a vehicle of Fig. 1;
Fig. 5A schematically shows a cross section along a line V-V indicated in Fig. 1 of a first embodiment of an air-sprung wheel axle suspension according to the invention;
Fig. 5B schematically shows a cross section along a line V-V indicated in Fig. 1 a second embodiment of an air-sprung wheel axle suspension according to the invention;
Fig. 6 shows a side view of a bearing bracket of the suspension of Fig. 1 during mounting;
Fig. 7A schematically shows a partial cross-sectional view along a height direction of the vehicle of a possible embodiment of a bracket plate of an air-sprung wheel axle suspension for a vehicle according to the invention;
Fig. 7B schematically shows a partial cross-sectional view along a height direction of the vehicle of a further possible embodiment of a bracket plate of an air-sprung wheel axle suspension for a vehicle according to the invention;
Fig. 8 schematically shows a partial cross-sectional view along a height direction of the vehicle of a further possible embodiment of a bracket plate of an air-sprung wheel axle suspension for a vehicle according to the invention;
Figs. 9A and 9B show a view in perspective and a cross section of a front end portion of a an embodiment of a trailing arm according to the invention having a separately made journal portion,
Figs. 10A and 10B show a view in perspective and a cross section of a front end portion of another embodiment of a trailing arm according to the invention having a separately made journal portion;
Figs. 11A and 11B show a view in perspective and a cross section of a front end portion of yet another embodiment of a trailing arm according to the invention having a separately made journal portion;
Figs. 12A and 12B show a view in perspective and a cross section of a front end portion of yet another embodiment of a trailing arm according to the invention having a separately made journal portion;
Figs. 13A and 13B show a view in perspective and a cross section of a front end portion of yet another embodiment of a trailing arm according to the invention having a separately made journal portion;
Fig. 14 shows in a cross section a front end portion of still another embodiment of a trailing arm according to the invention having a separately made journal portion;
Figs. 15A and 15B show a view in perspective and a cross section of a front end portion of still another embodiment of a trailing arm according to the invention having a separately made journal portion;
Fig. 16 shows a view in perspective of a front end portion of trailing arm according to the invention with crosshead shaped journal portions;
Fig. 17 shows a side elevational view of the front end portion of Fig. 16;
Fig. 18 shows a view in perspective of the front end portion of Fig. 18 with a elastomer element thereon;
Fig. 19 shows a possible embodiment of the elastomer element shown in Fig. 18;
Fig. 20 shows another embodiment of the elastomer element shown in Fig. 18;
Fig. 21 shows a view in perspective of a front end portion of trailing arm according to the invention with differently shaped crosshead shaped journal portions;
Fig. 22 shows view in perspective of the front end portion of Fig. 21 with a elastomer element thereon; and
Fig. 23 shows a side elevational view of the front end portion of Fig. 21.

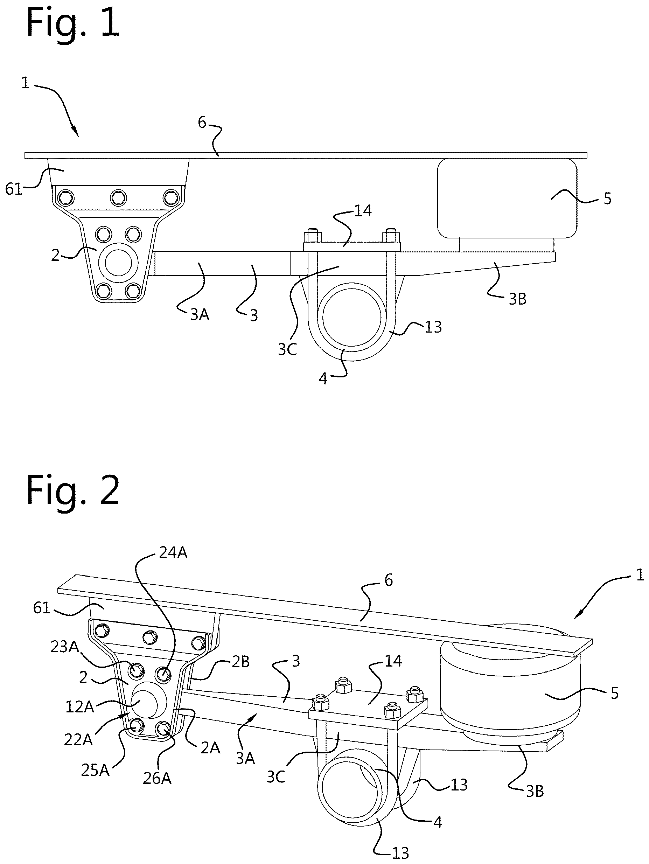

With reference to Figs. 1 and 2, one side of an air-sprung wheel axle suspension 1 for a vehicle, preferably a heavy vehicle such as a truck, a trailer, or a semi-trailer is shown. Note that this is only one side of the suspension. The suspension 1 comprises a bearing bracket 2 that is rigidly attached to a vehicle chassis 6. In the specific embodiment of Figs. 1 and 2 the bearing bracket 2 is attached to the chassis 6 via a chassis mounting plate 61. The bearing bracket 2 comprises at least a pair of opposing spaced apart lateral plates 2A, 2B, but can comprise more than these two plates 2A, 2B such as a front plate arranged in front of the bearing bracket 2 or a bottom plate arranged at a bottom side of the bearing bracket 2.

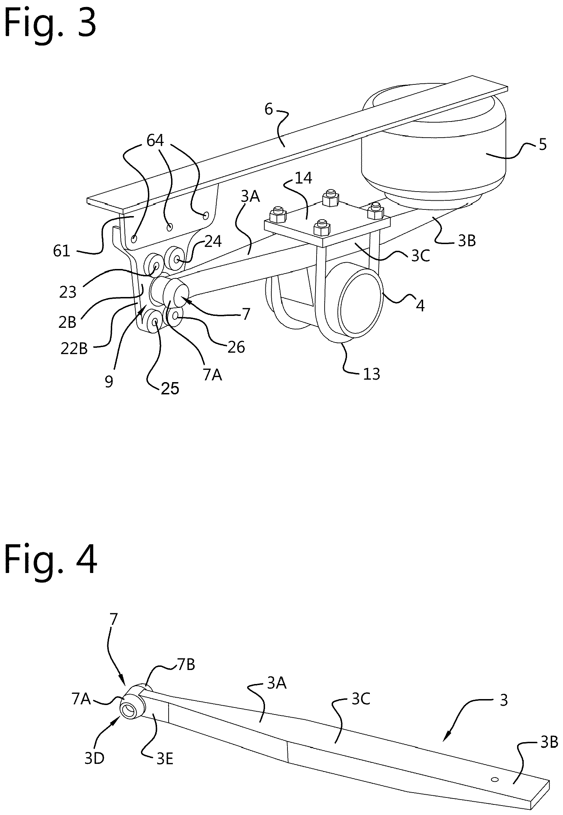

The suspension 1 further comprises a trailing arm 3 that is secured to an axle body 4 of the vehicle. The trailing arm 3 is separately shown in Fig. 4

In this particular example, the trailing arm 3 is a flexible trailing arm, which typically has a spring portion 3A designed as a leaf spring, which spring portion is located between the front end portion and the axle attachment. The trailing arm 3 has a mounting portion 3B to mount an air spring 5 to. The flexible trailing arm 3 of Fig. 4 is made in one piece from spring steel, e.g. by rolling and/or forging.

The orientation of the trailing arm 3 substantially coincides with a longitudinal axis of the vehicle, with the bearing bracket 2 being arranged in front of the axle body 4. As such, the trailing arm 3 has a front end portion 3D and a rear end portion 3B. The front end portion 3D of the trailing arm 3 is pivotally attached to the bearing bracket 2, the trailing arm 3 and the wheel axle 4 being able to swivel upwards and downwards with respect to the vehicle chassis 6, to suspend the wheel axle 4.

The suspension further comprises an air spring 5, operatively arranged between the vehicle chassis 6 and the rear portion 3B of the trailing arm 3, at a distance rearward from the spring portion 3A.

Between the spring portion 3A and the air spring mounting portion 3B the trailing arm 3 has an axle attachment portion 3C, where the axle body 4 can be attached to the trailing arm 3. In the specific example of Figs. 1 and 2, the attachment of the axle body 4 is by means of U-bolts 13 located on either lateral side of the trailing arm 3 and extend around the axle body 4. A strap plate 14 arranged on an upper side of the trailing arm 3 acts as a counterpart to be able to tighten the U-bolts 13.

It is noted that the configuration of the wheel axle suspension as shown in Figs. 1 and 2 and the shape of the particular components 2, 3, 4, 5, 13, and 14 therein is to be considered as an example only. Many other configurations and shapes are known and are conceivable within the scope of the invention.

The trailing arm 3 may be a flexible trailing arm as shown in the example, where the trailing arm has an inherent resiliency and acts as a leaf spring portion between the axle body 4 and the front end portion 3D. However, the trailing arm may also be a rigid trailing arm, where the trailing arm is rigid compared to a flexible trailing arm and has no inherent spring action. The use of a flexible trailing arm is preferred herein.

It is noted that, within these two principle types of trailing arms (flexible vs. rigid), many variations on the trailing arm concept are known, including trailing arms comprising two parts, which parts are clamped together at the axle body 4 of the vehicle, securing the axle body 4 in between these two parts, and trailing arms like the one shown in Figs. 1 and 2, that are formed in one piece, extending both in front of the axle body and rearwards of the axle body 4 when viewed in the driving direction of the vehicle. The skilled person will further realise that trailing arms can be clamped to an axle body 4 in many different ways, for example with straps or with bolts. The trailing arm of the invention may be any type of trailing arm.

It is further noted that an air-sprung wheel axle suspension, for example an air-sprung wheel axle suspension 1 according to the invention, is typically used for industrial or utility vehicles, such as trucks, trailers, and semi-trailers.

It is further noted that the bearing bracket 2 of the suspension 1 according to the invention can comprise more plates than the mentioned pair of opposing lateral plates 2A, 2B. For example, the bearing bracket 2 can also comprise a front plate, provided at the front side of the opposing spaced apart lateral plates 2A, 2B (when viewed in the driving direction of the vehicle). The bearing bracket 2 can also comprise a bottom plate, arranged at bottom sides of the opposing spaced apart lateral plates 2A, 2B.

It is further noted that the air spring 5 of the suspension according to the invention may be arranged anywhere at a distance rearward from the front end portion 3D of the trailing arm 3, between the trailing arm 3 and the vehicle chassis 6. The air spring 5 can for example be arranged rearward of the wheel axle 4, when viewed in the driving direction of the vehicle. Alternatively, the air spring 5 can be arranged at least partially above the axle body 4 of the vehicle. Yet alternatively, the air spring 5 can be arranged between the bearing bracket 2 of the suspension 1 and the axle body 4, i.e. in front of the axle body 4 when viewed in the driving direction of the vehicle.

Mainly visible in Figs. 3 - 5, the trailing arm 3 according to the invention comprises a hammerhead 7 at the front end portion 3A thereof, and the lateral plates 2A, 2B of the bearing bracket 2 each have at least one receiving recesses or cavities 8, 9 configured to receive at least a part of said hammerhead 7. In a mounted state of the suspension, the hammerhead 7 is received in the opposing receiving recesses 8, 9 formed in the plates 2A, 2B, such that the trailing arm 3 is able to pivot with respect to the bracket 2.

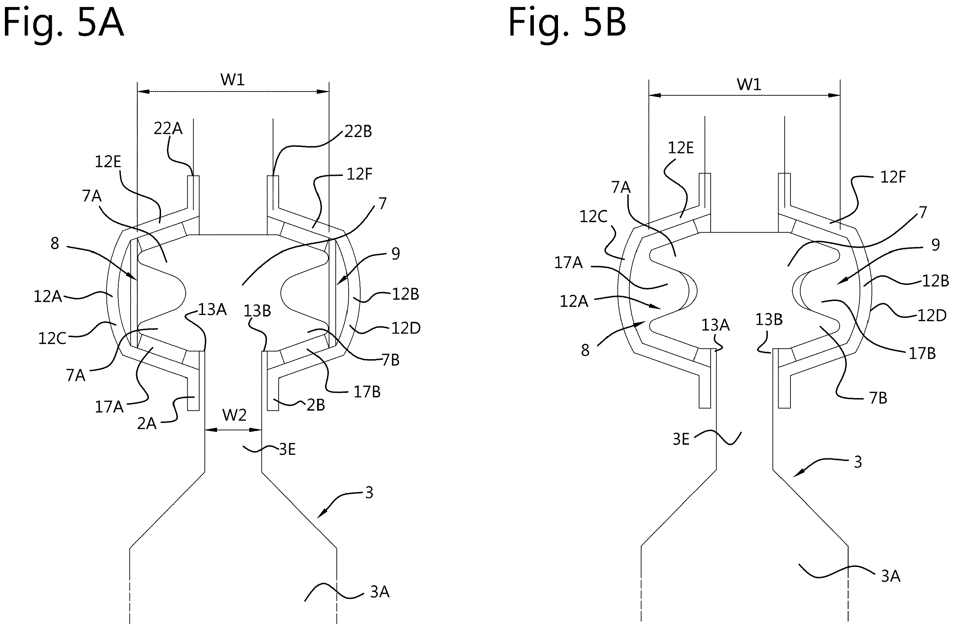

An example of a pivot arrangement comprising a hammerhead 7 and bracket plates 2A, 2B with receiving recesses 8, 9 are illustratively shown in Figs. 5A and 5B. The respective lateral plates 2A, 2B of the bearing bracket 2 comprise a journal housing 12A, 12B bulging out with respect to a main plane 22A, 22B of the lateral plate 2A, 2B. The respective journal housings 12A, 12B are protrusions formed in the lateral plate and defining the respective receiving recesses 8, 9, which are located in said protrusion 12A, 12B. In the specific embodiment of Figures 5A and 5B, the journal housings 12A, 12B are formed integrally in the lateral plate 2A, 2B.

Further visible in the embodiments of Figs. 5A and 5B, is that the journal housing 12A, 12B bulges out with respect to the main plane 22A, 22B of the lateral plate 2A, 2B in a direction away from the trailing arm 3, i.e. outwardly.

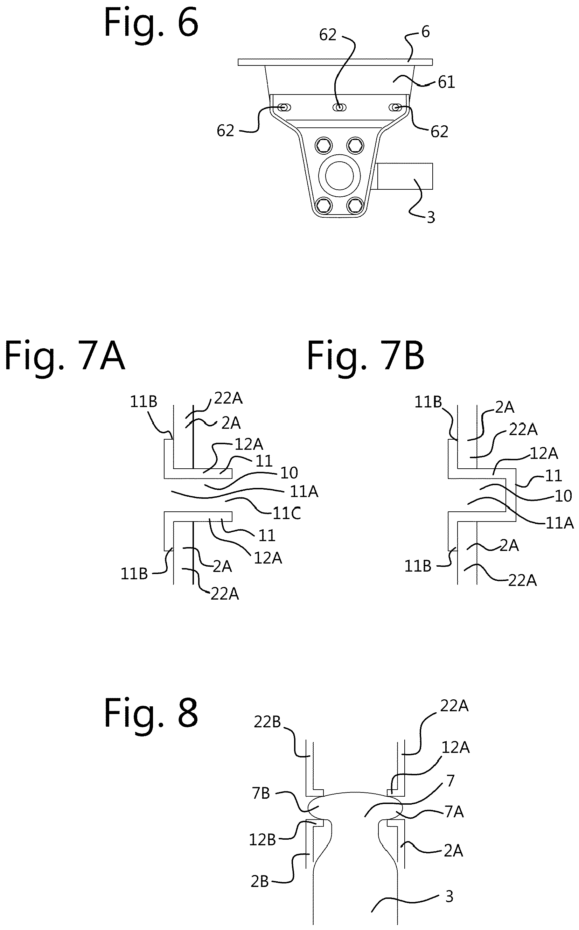

Alternatively, as visible with reference to Figs. 7A and 7B, the receiving cavities 8, 9 can be formed in a journal housing 12A, 12B that bulges outwardly with respect to the lateral plates 2A, 2B, wherein the journal housing 12A, in an assembled state, is formed by an insert 11. In the specific embodiment of Figs. 7A and 7B, the plates 2A, 2B of the bracket 2 each have an aperture 10, wherein at least one insert 11 comprises an open end 11A, and optionally a second open end 11C, extends through said aperture 10 and is attached to the corresponding plate 2A, 2B.The insert 11 forms the journal housing 12A, 12B in which the receiving cavity 8, 9 is located. The journal housing 12A, 12B in the plate 2A, 2B is formed by inserting the insert 11 through the aperture 10 in the plate 2A, 2B such that the insert 11 protrudes outwards with respect to the plate 2A, 2B and forms the journal housing 12A, 12B.

Further visible in the embodiments of Figs. 7A and 7B is that the insert 11 further has a flange 11B formed at the open end 11A on an outer side of the insert 11. The insert 11 is attached to the plate 2A, 2B at the flange, for example by attaching the flange 11B to inner sides of the plate 2A, 2B.

Yet alternatively, as visible in the embodiment of Fig. 8, the journal housing 12A, 12B of the lateral plate 2A, 2B bulges out with respect to the main plane 22A, 22B of the lateral plate 2A, 2B in a direction towards the trailing arm 3, i.e. inwards. This embodiment, as shown in Fig. 8, is achieved by forming the journal housing 12A, 12B integrally with the main plate 22A, 22B of the lateral plates 2A, 2B. Alternatively, in an embodiment not shown, the inwardly protruding journal housing 12A, 12B can be formed by an insert.

In the embodiments of the invention shown in Figs. 1, 2, 3, 5A, 5B, and 7B, the journal housings 12A, 12B in the lateral plates 2A, 2B have a closed, or bottom, end and an opposite open end. The closed end does not contain holes, apertures, openings, or the like in said embodiments.

In an alternative embodiment however, illustratively sketched in Fig. 7A, the journal housings 12A, 12B in the lateral plates 2A, 2B have two closed ends, containing an opening 11C.

In the specific embodiment of Fig. 7A, transverse outer ends of the protrusion surfaces are open. In yet alternative, non-shown, embodiments, the outer protrusion surface of the journal housings 12A, 12B may contain holes, slits, or other openings along a circumferential direction.

Many different shapes of the journal housings 12A, 12B that form the receiving recesses 8, 9 are conceivable. As will be explained below, it is preferred when transversely extending outer hammerhead portions 7A, 7B are rotationally symmetric, and, as such, it is also preferred when at least the inner contour surfaces of the journal housings 12A, 12B are rotationally symmetric as well.

A possible form of the journal housings 12A, 12B is a substantially cup-shaped form. This cup-shaped form is for example visible in Fig. 2, and also in the longitudinal cross-sectional view of Figs. 5A and 5B. In the embodiment of Figs. 2, 5A and 5B the transverse outer ends of the journal housings 12A, 12B are formed by a dome shaped wall portion 12C, 12D in the shown example with a concave inner side and a convex outer side. These transverse outer ends 12C, 12D could also be formed by a substantially straight/flat wall portion. Also the wall portion 12E, 12F of the journal housings 12A, 12B connecting the transverse outer end 12C, 12D of the journal housing 12A, 12B to the lateral plate 2A, 2B, is substantially conical in Figs. 2 and 5A, 5B. This wall portion 12E, 12F can also, alternatively, be cylindrical or spherical.

In Fig. 7B, the shape of the journal housing 12A is cylindrical. The shape of the journal housing 12A of Fig. 7B however can for example have at least a spherical shape. This spherical shape is also possible for the journal housing 12A, 12B of Fig. 7A.

With respect to the hammerhead 7, the hammerhead 7 is located at a front end portion 3D of the trailing arm 3, seen in the direction of travel of the vehicle. This front end portion 3D has transversely extending journal portions 7A, 7B with respect to a part of the trailing arm 3 adjacent the front end portion 3D. These transversely extending journal portions 7A, 7B define the shape of the hammerhead 7. In the embodiments shown in the Figures, the hammerhead 7 comprises two opposite, rotationally symmetric journal portions 7A, 7B, which are received in the respective receiving recesses 8, 9.

Also with respect to the oppositely extending, rotationally symmetrical journal portions 7A, 7B, many different shapes are possible and only some conceivable shapes are illustratively shown in the Figures of this application.

In possible embodiments, for example shown in Figs. 5A and 5B, the outer surface of the oppositely extending, rotationally symmetrical journal portions 7A, 7B is at least partially conical, wherein the diameter of the journal portions 7A, 7B decreases towards a transverse outer end of the journal portion 7A, 7B. In a possible embodiment, the outer surface of these journal portions 7A, 7B may be at least partially spherical instead of frusto-conical.

Further visible with respect to the embodiments of Figs. 5A and 5B, is that the trailing arm 3, where it is received between lateral plates 2A, 2B of the bracket 2, comprises a necked portion 3E, where the trailing arm 3 is, locally, relatively narrow in width. Preferably, the transition 13A, 13B between this necked portion 3E and the hammerhead 7, is gradual, forming a curved transition instead of a straight transition. The radius of the curved transition 13A, 13B can however vary.

Further visible in Fig. 5A is a width W2 of the necked portion 3E of the trailing arm 3 and a width W1 of the hammerhead 7. Preferably, the total width W1 of the hammerhead 7 is at least 10% larger than the width W2 of the necked portion 3E of the hammerhead 7 that adjoins the hammerhead 7, or, when no necked portion can be defined, the total width W1 of the hammerhead 7 is preferably at least 10% larger than a width of the trailing arm portion that adjoins the hammerhead 7.

Further visible in Figs. 5A and 5B, is that the transversely extending journal portions 7A, 7B, and optionally also a part of the hammerhead 7 that does not extend transversely, are at least partially hollow to further save weight. In Fig. 5A, this hollow part is not filled and thus empty, while this hollow part is filled with a part of an elastomer element 17A, 17B in Figure 5B. The elastomer may for example be a rubber or PU.

Such an elastomer element 17A, 17B is shown in the embodiments of both Figures 5A, 5B, arranged against the outer surfaces of each of the journal portions 7A, 7B, between the outer surfaces of the journal portions 7A, 7B and the inner surface of the journal housings 12A, 12B that form the receiving recesses 8, 9. The elastomer element 17A, 17B is preferably compressed between the outer surfaces of the journal portions 7A, 7B and the inner surface of the journal housings 12A, 12B that form the receiving recesses 8, 9. The elastomer element 17A, 17B provides a limited amount of freedom in a rotational direction for said trailing arm hammerhead 7.

In Fig. 5A, the elastomer element 17A, 17B is formed as a ring and is, in circumferential direction, clamped against the outer surfaces of the journal portions 7A, 7B. In Fig. 5B, the journal portions 7A, 7B are almost entirely covered by the elastomer elements 17A, 17B, wherein almost the entire outer surface of the journal portions 7A, 7B contacts a first side of the elastomer elements 17A, 17B while a second side of the elastomer elements 17A, 17B, opposite to the first, contacts the inner surface of the journal housings 12A, 12B in the lateral plates 2A, 2B.

Further visible in Figs. 5A and 5B, is that the hammerhead 7 is received in the receiving recesses 8, 9.

The hammerhead 7 is locked in the transverse direction between the lateral plates 2A, 2B of the bearing bracket 2, which prevents the hammerhead 7, in a mounted state, to move in a transverse direction of the vehicle with respect to the receiving recesses 8, 9, or with respect to the bracket 2, or with respect to the vehicle chassis. Note that the hammerhead 7 is not clamped at outer transverse ends thereof, as it would then not be able to pivot. The hammerhead 7 is only clamped at its transversely extending portions, i.e. at the portions where an elastomer is arranged.

As the elastomer element 17A, 17B is tightly compressed between the outer surface of the journal portions 7A, 7B and the inner surface of the journal housings 12A, 12B, this still greatly prevents the hammerhead 7, in a mounted state, to move in a transverse direction of the vehicle with respect to the receiving recesses 8, 9, or with respect to the bracket 2, or with respect to the vehicle chassis. Of course the movement of the hammerhead 7 in a radial direction is also prevented by the journal housings 12A, 12B enclosing the journal portions 7A, 7B.

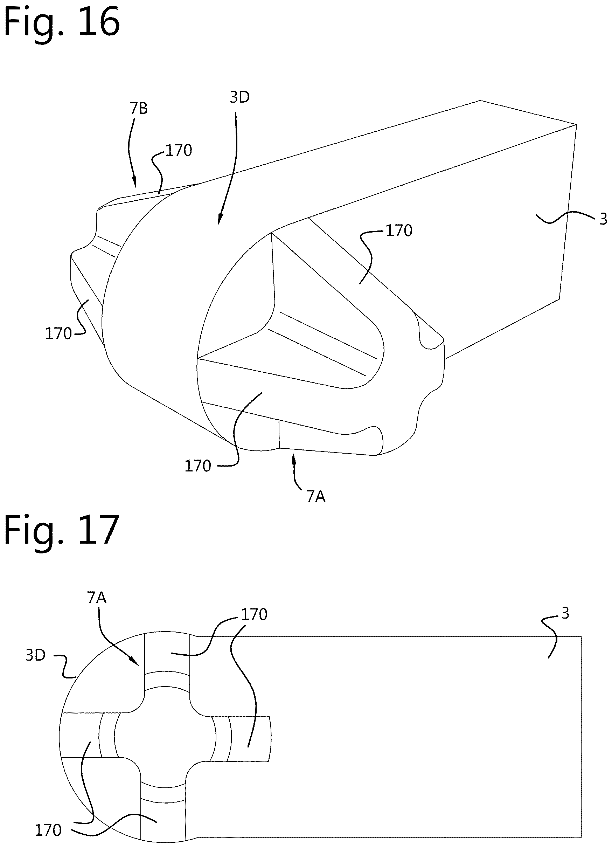

In Fig. 16 - 18 is illustrated another embodiment of an end portion 3D of a trailing arm 3. In this embodiment the journal portions 7A and 7B of the hammerhead have a crosshead shape as is clearly visible in Figs 16 and 17. The crosshead is rotationally symmetric.

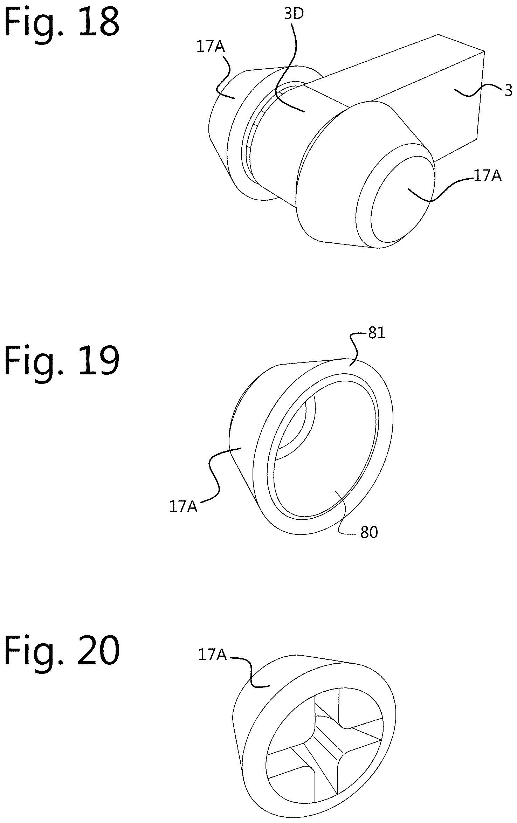

An elastomer element 17A can be placed over the crosshead as is shown in Fig 18. In Figs 19 and 20 two possible embodiments of an elastomer element 17A are shown.

In Fig. 19 is show an elastomer element which comprises an elastomer layer 81 which is provided on a metal cup-shaped body 80 by vulcanisation. The elastomer element 17A has substantially a frusto-conical shape. The metal cup-shaped body 80 is placed over the crosshead and engages with the engagement surfaces 170 thereof.

In Fig. 20 an elastomer element 17A is shown which has internally formed a crosshead counterform, which snugly fits over the crosshead shaped journal portions 7A, 7B. This elastomer element 17A thus provides an interlocking engagement (form fitting) with the journal portion in a rotational direction.

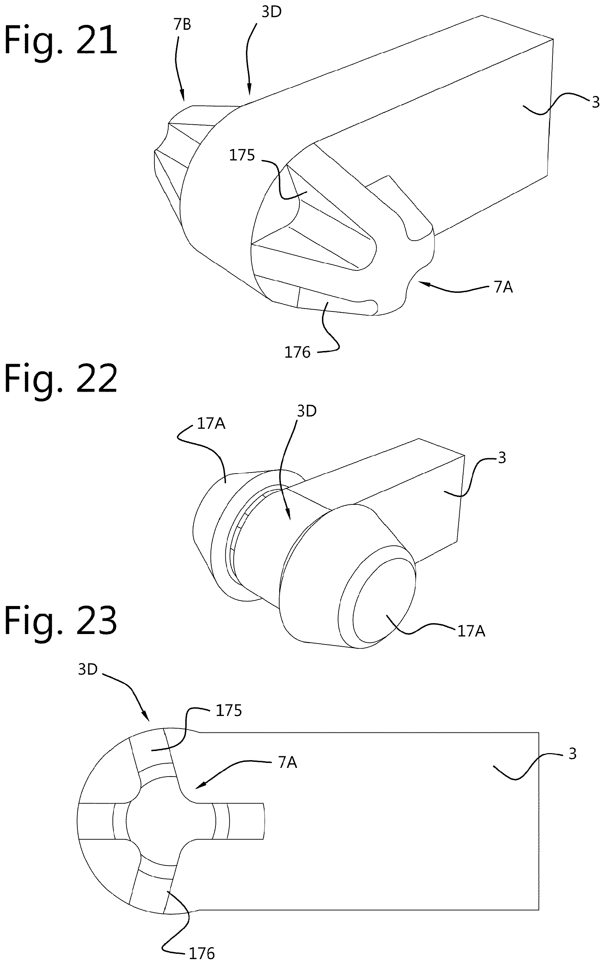

In Figs. 21 and 23 is illustrated yet another embodiment of an end portion 3D of a trailing arm 3. In this embodiment the journal portions 7A and 7B of the hammerhead have a crosshead shape which in contrast to the crosshead shape shown in Figs 16 and 17 is rotationally asymmetric. As can be best seen when comparing Fig. 23 with Fig. 17 the cross-element of the cross heads are not evenly distributed over the circumference of the journal portion 7A, 7B, but the upwardly and downwardly extending portions 175, 176 are inclined over an angle to the front.

In Fig. 22 is shown that an elastomer element 17A is arranged over the crosshead shaped journal portions 7A, 7B. This can be an elastomer element as is shown in Fig. 19. It may also be an elastomer element comparable to the one shown in Fig. 20, but then with an internally formed crosshead shape that corresponds to the cross head shape of the journal portions shown in Figs. 21 and 23.

The vehicle suspension according to the invention comprises a trailing arm 3 with a hammerhead 7 and a bracket 2 with a pair of opposing spaced apart lateral plates 2A, 2B, which lateral plates 2A, 2B comprise receiving recesses 8, 9 configured to receive the hammerhead 7. Advantageously, with reference to Figures 1 and 3, a chassis mounting plate 61 is further provided, wherein the plates 2A, 2B of the bracket 2 are rigidly attached to the chassis mounting plate 61 in the mounted state of the suspension. The chassis mounting plate 61 is associated with the vehicle chassis and extends downwards with respect to the vehicle chassis 6 in a substantially vertical direction, providing a vertical spacing between the trailing arm 3, the wheel axle 4, and the vehicle chassis 6. The height of said chassis mounting plate 61, and thus the vertical spacing between the trailing arm 3, the wheel axle 4, and the vehicle chassis 6 can be tailored to specific vehicle requirements. It is thus possible to mount differently sized chassis mounting plates 61 to the chassis 6, having different heights, whereby the vehicle manufacturer is able to vary the distance of the trailing arm 3 from the chassis 6.

Further advantageously, the bracket 2 comprises holes 62 (cf. Figs. 3 and 6) and the chassis mounting plate 61 comprises holes 64. The holes 64 in the chassis mounting plate 61 and the holes 62 in the bearing bracket 2 are aligned to allow the bracket 2 to be rigidly attached to the chassis mounting plate 61, e.g. with bolts and nuts, wherein at least the holes 62 in the bracket 2 or the holes 64 in the chassis mounting plate 61 have a slot shape.

In the particular embodiment of Figs. 3 and 6, the holes 62 in the bracket 2 can be slotted holes, while the holes 64 in the chassis mounting plate 61 are round. This allows to adjust the position of the bearing bracket with respect to the chassis in the longitudinal direction. It is however well conceivable that all holes 62, 64 in the bracket 2 and the chassis mounting plate 61 are round, that all holes 62, 64 in the bracket 2 and the chassis mounting plate 61 are slotted, or that the holes 62 in the bracket 2 are slotted, while the holes 64 in the chassis mounting plate 61 are round.

Visible in Fig. 3 are four more holes 23, 24, 25 ,26 in the plates 2A, 2B of the bracket 2. These holes 23, 24, 25 ,26 can be used to rigidly mount the two plates 2A, 2B of the bearing bracket 2 to each other, for example with bolts 23A, 24A, 25A ,26A as visible in Fig. 2. Other fastening methods are however possible to rigidly mount the two plates 2A, 2B to each other, for example by welding, with an adhesive, with rivets, or with other connectors.

Regarding the mounting of the air-sprung wheel axle suspension to the vehicle chassis, it is foreseen that the bracket 2 and the trailing arm 3 are first mounted to each other, before the bracket is mounted to the chassis 6 or the chassis mounting plate 61. This in contrast to the method of mounting air-sprung wheel axle suspensions as they are known in the art, where it is the convention to first mount the bracket to the chassis or a mounting plate, after which the trailing arm is mounted to the bracket.

It was previously described that the receiving recesses 8, 9 in the lateral plates 2A, 2B can be formed by journal housings 12A, 12B in the plates 2A, 2B, which journal housings 12A, 12B can be formed by an insert 11.

In an alternative, preferred, method, the bracket 2 is manufactured using a forming press, a forming die, and a sheet metal blank, via a method that comprises at least the step of drawing the sheet metal blank into the forming die with the die forming press, such that a receiving cavity 8, 9 in a lateral plate 2A, 2B of the bracket 2 is formed. The lateral plates 2A, 2B can afterwards be manipulated to provide holes, or they may have a closed outer surface as in the embodiments of Figs. 1 - 3.

In the embodiments described with reference to Figs. 1 - 6 the journal portions 7A, 7B are integrally formed on the front end portion 3D of the trailing arm 3.

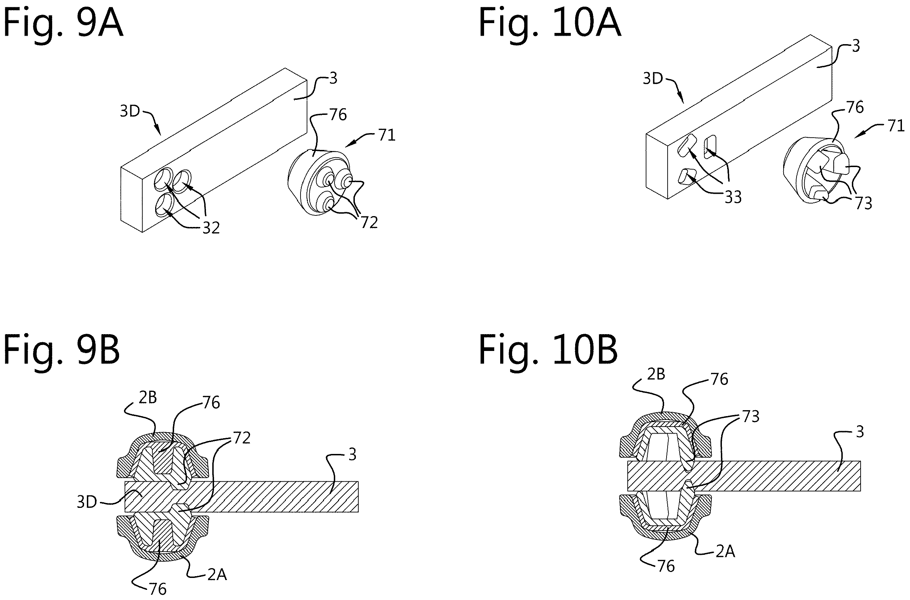

It is however also possible to make the journal portions as separate parts which are interconnected with the front end portion of the trailing arm. In Figs. 9 - 15 are shown different possible embodiments having separate journal portions.

In Figs. 9A and 9B the journal portions 71 each have interlocking protrusions 72 and the front end portion 3D of the trailing arm 3 has corresponding recesses 32 formed in it to interlock the journal portion 71 and the front end portion 3D of the trailing arm 3. The protrusions 72 are formed in this embodiment as frusto-conical protrusions. The journal portions 72 are connected with the front end portion 3D of the trailing arm 3 in an interlocking manner. An elastomer body 76 is arranged on the outer side of the journal portion 71.

In Figs. 10A and 10B the journal portions 71 have protrusions 73 essentially formed as a trapezoid and in the trailing arm mating holes 33 are formed to provide an in an interlocking engagement between the trailing arm and the journal portion 71. An elastomer body 76 is arranged on the outer side of the journal portion 71.

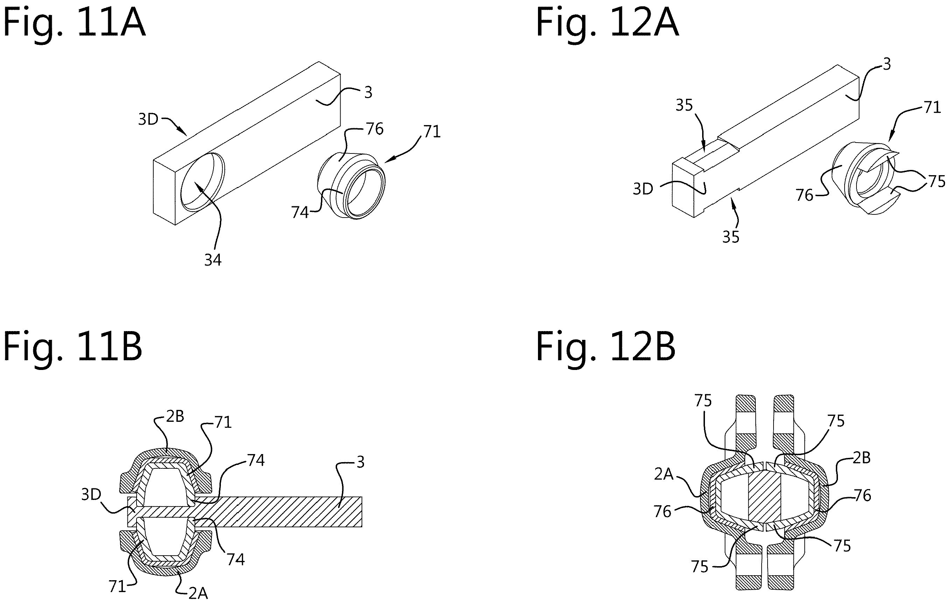

In Fig. 11A and 11B an embodiment is shown in which the front end portion 3D of the trailing arm 3 is provided with a circular recess 34. The journal portion 71 has a ring portion 74 formed at the end which is inserted in the circular recess 34 to provide an interlocking engagement. An elastomer body 76 is arranged on the outer side of the journal portion 71.

Fig. 12A and 12B show an embodiment in which in the upper surface and lower surface of the front end portion 3D of the trailing arm 3 a recess 35 is formed. The journal portions 71 are provided with opposite circle segments 75 which fit in the recesses 35, whereby an interlocking engagement is provided. An elastomer body 76 is arranged on the outer side of the journal portion 71.

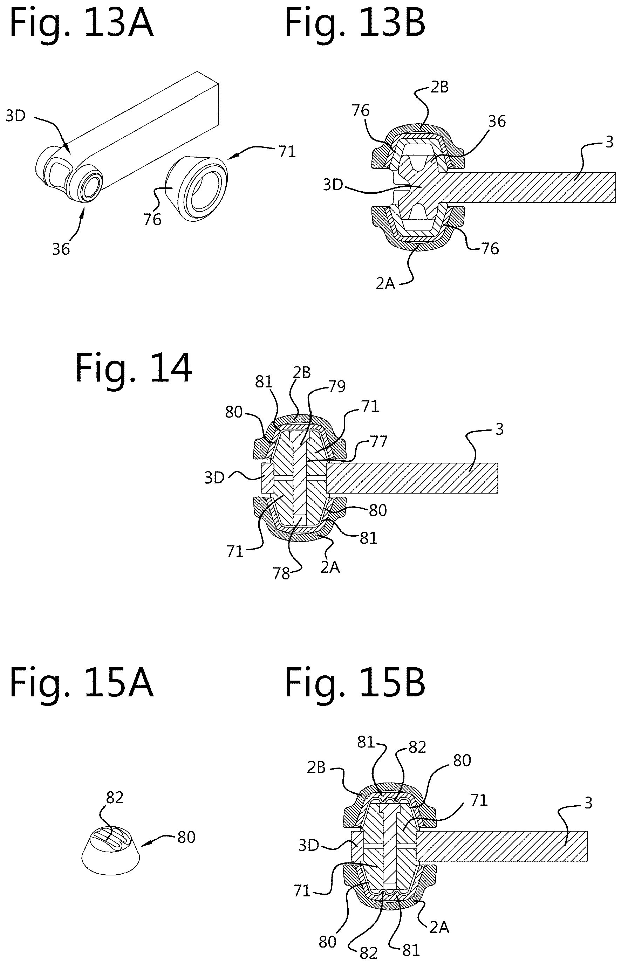

Fig. 13A and 13B show an embodiment wherein the front end 3D of the trailing arm is provided with integral journal portions 36, wherein a separate cup shaped journal body 71 with an elastomer layer 76 on the outside is placed over the integral journal portion 36.

In Fig. 14 an embodiment is shown in which the front end portion 3D of the trailing arm 3 has a through hole. The journal bodies 71 are with one end fitted in the hole. The journal bodies 71 have a bore 77, 78 which are aligned. A screw bolt 79 extends through said bores 77, 78 and engages with a female screw thread in one of the bores 78. The journal portions are thus connected with the front end portion of the trailing arm 3 by a bolt or screw connection. A cup shaped body 80 with an elastomer layer 81 on the outside is placed over the journal bodies 71.

Fig. 15 shows a similar embodiment as Fig. 14. However with a differently shaped cup-shaped body 80 that is arranged over the journal body 71. In this embodiment the cup shaped body 80, which is separately shown in Fig. 15A, has a corrugated bottom 82.

The invention can be summarized by the following clauses:
1. An air-sprung wheel axle suspension (1) of a vehicle for suspending a wheel axle from a vehicle chassis, the suspension comprising a bearing bracket (2), a trailing arm (3) and an air spring (5), wherein:
   - the bearing bracket (2) is rigidly attached to the vehicle chassis (6) and comprises a pair of opposing spaced apart lateral plates (2A, 2B),
   - the trailing arm (3) is secured to the axle body (4) of the vehicle, said trailing arm (3) having a front end portion (3D) that is pivotably attached to the bearing bracket (2),
   - the air spring (5) is operatively arranged between the vehicle chassis (6) and the trailing arm (3), at a distance rearward from the front end portion (3D),
   wherein the trailing arm (3) has a hammerhead configuration (7) at the front end portion (3D) and wherein, at least one of the lateral plates (2A, 2B) of the bearing bracket (2) has a receiving recess (8, 9) configured to receive a part of the hammerhead configuration (7), wherein said hammerhead configuration (7), in a mounted state of the suspension, is received and supported in the receiving recess (8, 9), such that the front end portion of the trailing arm (3) is able to pivot with respect to the bearing bracket (2).
2. Air-sprung wheel axle suspension according to clause 1, wherein the hammerhead configuration (7) comprises two opposite journal portions (7A, 7B) that extend transversely with respect to a longitudinal axis of the trailing arm, and wherein each of the lateral plates (2A, 2B) has a receiving recess (8, 9), wherein the journal portions (7A, 7B) are received in the respective receiving recesses (8, 9) of the bearing bracket (2).
3. Air-sprung wheel axle suspension according to clause 2, wherein the journal portions are rotationally symmetric.
4. Air-sprung wheel axle suspension according to clause 2 or 3, wherein the journal portions are integrally formed on the front end portion of the trailing arm.
5. Air-sprung wheel axle suspension according to clause 2 or 3, wherein the journal portions are separate parts which are interconnected with the front end portion of the trailing arm.
6. Air-sprung wheel axle suspension according to clause 5, wherein the journal portions are connected with the front end portion of the trailing arm in an interlocking manner.
7. Air-sprung wheel axle suspension according to clause 6, wherein each of the journal portions has at least one interlocking protrusion and the front end portion of the trailing arm has at least one corresponding recess formed in it to interlock the journal portion and the front end portion of the trailing arm.
8. Air-sprung wheel axle suspension according to clause 5, wherein the journal portions are connected with the front end portion of the trailing arm in an non-positively locking manner (i.e. a force fitting manner).
9. Air-sprung wheel axle suspension according to clause 8, wherein the journal portions are connected with the front end portion of the trailing arm by a bolt or screw connection.
10. Air-sprung wheel axle suspension according to any of the preceding clauses, wherein the respective lateral plates (2A, 2B) of the bracket (2) comprise a journal housing (12A, 12B), and wherein the receiving recess (8, 9) is defined by said journal housing (12A, 12B).
11. Air-sprung wheel axle suspension according to clause 10, wherein the journal housing (12A, 12B) bulges out with respect to the main plane (22A, 22B) of the lateral plate (2A, 2B) in a direction away from the trailing arm (3), i.e. outwards.
12. Air-sprung wheel axle suspension according to clause 10, wherein the journal housing (12A, 12B) bulges out with respect to the main plane (22A, 22B) of the lateral plate (2A, 2B) in a direction towards the trailing arm (3), i.e. inwards.
13. Air-sprung wheel axle suspension according to any of the clauses 10 - 12, wherein the journal housing (12A, 12B) is formed integrally in the lateral plate (2A, 2B) of the bearing bracket.
14. Air-sprung wheel axle suspension according to one of the clauses 10 - 13, wherein the journal housing is formed as a separate part and the lateral plates (2A, 2B) of the bearing bracket (2) each have an aperture (10), wherein the journal housing (11) extends through said aperture (10) and is attached to the corresponding plate (2A, 2B).
15. Air-sprung wheel axle suspension according to clause 14, wherein the journal housing (11) has a flange (11B) formed around the open end (11A) on an outer side of the journal housing (11), wherein the journal housing (11) is attached to the plate (2A, 2B) at the flange (11B).
16. Air-sprung wheel axle suspension according to any of the clauses 10 - 15, wherein the journal housing (12A, 12B) in the lateral plates (2A, 2B) is substantially cup-shaped having a closed end and an opposite open end.
17. Air-sprung wheel axle suspension according to any of the clauses 10 - 16, wherein the journal housings (12A, 12B) have a (frusto-)conical shape.
18. Air-sprung wheel axle suspension according to any of the clauses 10 - 15, wherein the journal housings (12A, 12B) have at least partially a spherical shape.
19. Air-sprung wheel axle suspension according to any of clauses 2 - 18, wherein said journal portions (7A, 7B) have a cylindrical outer surface.
20. Air-sprung wheel axle suspension according to any of clauses 2 - 18, wherein said journal portions (7A, 7B) have a tapering, in particular a conical outer surface.
21. Air-sprung wheel axle suspension according to any of the clauses 2 - 20, wherein the journal portions (7A, 7B) are at least partially hollow.
22. Air-sprung wheel axle suspension according to any of the preceding clauses, wherein the hammerhead configuration (7) has a width (W1), defined in a direction transverse to the longitudinal axis of the trailing arm, that is at least 10% larger than a width (W2) of the trailing arm portion that adjoins the hammerhead configuration (7).
23. Air-sprung wheel axle suspension according to any of the clauses 2 - 22, wherein an elastomer element (17A, 17B) is arranged between an outer surface of each one of the journal portions (7A, 7B) and an inner surface of the corresponding journal housing.
24. Air-sprung wheel axle suspension according to clause 23, wherein the elastomer element is provided on a rigid, preferably metal support ring.
25. Air-sprung wheel axle suspension according to clause 23, wherein the elastomer element is provided on a rigid, preferably metal, generally cup-shaped body.
26. Air-sprung wheel axle suspension according to clause 25, wherein the cup-shaped body has a corrugated bottom.
27. Air-sprung wheel axle suspension according to any of clauses 24 - 26, wherein the support ring or the generally cup-shaped body is made of sheet metal.
28. Air-sprung wheel axle suspension according to any of the clauses 24 - 27, wherein the elastomer element is vulcanized on the support ring or the generally cup-shaped body.
29. Air-sprung wheel axle suspension according to clause 23, wherein the elastomer element is provided directly on the journal portion.
30. Air-sprung wheel axle suspension according to any of the preceding clauses, wherein the receiving recesses (8, 9) have a depth (D1, D2) relative to the corresponding lateral plate (2A, 2B) and are spaced apart by a distance (D3) and wherein the hammerhead configuration (7) has a width (W1), and wherein at least the depth (D1, D2) of the receiving recesses (8, 9), the distance (D3) between the receiving recesses (8, 9), and the hammerhead width (W1) are matching, to prevent the hammerhead configuration (7), in the mounted state of the suspension, to move with respect to the receiving recesses (8, 9) in a transverse direction of the vehicle.
31. Air-sprung wheel axle suspension according to any of the preceding clauses, wherein the lateral plates (2A, 2B) of the bearing bracket (2), in the mounted state of the suspension, are rigidly attached to a chassis mounting plate (61) that is associated with the vehicle chassis and that extends downwards with respect to the vehicle chassis (6).
32. Air-sprung wheel axle suspension according to clause 31, wherein the bearing bracket (2) and the chassis mounting plate (61) each comprise at least two holes (62, 63, 64, 65), the holes (62, 63, 64, 65) in the chassis mounting plate (61) and the bearing bracket (2) being aligned to allow the bearing bracket (2) to be rigidly attached to the chassis mounting plate (61), e.g. with bolts and nuts, wherein at least the holes (62, 63, 64, 65) in the bearing bracket (2) or the holes (62, 63, 64, 65) in the chassis mounting plate (61) have a slot shape to allow aligning of the bearing bracket (2) and the associated trailing arm (3) and axle body (4).
33. Air-sprung wheel axle suspension according to clause 1, wherein one of the lateral plates (2A, 2B) has a receiving recess and the other one of the lateral plates (2A, 2B) has a bearing surface, wherein the hammerhead has one journal portion, wherein said journal portion is received in the receiving recess, and wherein a surface of the hammerhead portion opposite the journal portion bears against the bearing surface.
34. Trailing arm (3) of an air-sprung wheel axle suspension (1) of a vehicle, the trailing arm (3) being securable to an axle body (4) of the vehicle, the trailing arm (3) having a front end portion (3A) that can be pivotably attached to a bearing bracket (2) associated with a vehicle chassis, the trailing arm (3) having a front end portion (3A) with a hammerhead configuration (7), the hammerhead configuration (7) being adapted to be received in opposing spaced apart receiving recesses (12A, 12B) provided in lateral plates (2A, 2B) of the bearing bracket (2), such that the hammerhead configuration (7) is able to pivot with respect to said receiving recesses (8, 9).
35. Bearing bracket (2) of an air-sprung wheel axle suspension (1) of a vehicle, the bearing bracket (2) being rigidly attachable to a vehicle chassis (6) and comprising a pair of opposing spaced apart lateral plates (2A, 2B), wherein the lateral plates (2A, 2B) of the bearing bracket (2) each have at least one receiving recess (8, 9) configured to receive a part of a hammerhead configuration (7) of a trailing arm (3), such that said hammerhead configuration (7) is able to pivot with respect to said bearing bracket (2).

## Claims

1. Trailing arm (3) of an air-sprung wheel axle suspension (1) of a vehicle, the trailing arm (3) being securable to an axle body (4) of the vehicle, the trailing arm (3) having a front end portion (3D) that can be pivotably attached to a bearing bracket (2) associated with a vehicle chassis, wherein the front end portion (3D) has a hammerhead configuration (7), the hammerhead configuration (7) being adapted to be received in opposing spaced apart receiving recesses (12A, 12B) provided in lateral plates (2A, 2B) of the bearing bracket (2), such that the hammerhead configuration (7) is able to pivot with respect to said receiving recesses (8, 9).

2. Trailing arm according to claim 1, wherein the hammerhead configuration (7) comprises two opposite journal portions (7A, 7B) that extend transversely with respect to a longitudinal axis of the trailing arm, wherein the journal portions (7A, 7B) are adapted to be received in the respective receiving recesses (8, 9) of the bearing bracket (2).

3. Trailing arm according to claim 2, wherein the journal portions are rotationally symmetric.

4. Trailing arms according to claim 2 or 3, wherein the journal portions are integrally formed on the front end portion of the trailing arm.

5. Trailing arm according to claim 2 or 3, wherein the journal portions are separate parts which are interconnected with the front end portion of the trailing arm.

6. Trailing arm according to claim 5, wherein:
- the journal portions are connected with the front end portion of the trailing arm in an interlocking manner, wherein, preferably, each of the journal portions has at least one interlocking protrusion and the front end portion of the trailing arm has at least one corresponding recess formed in it to interlock the journal portion and the front end portion of the trailing arm;
- the journal portions are connected with the front end portion of the trailing arm in an non-positively locking manner, i.e. a force fitting manner, wherein, preferably, the journal portions are connected with the front end portion of the trailing arm by a bolt or screw connection.

7. Trailing arm according to any one of the claims 2 - 6, wherein said journal portions (7A, 7B) have a cylindrical outer surface or said journal portions (7A, 7B) have a tapering, in particular a (frusto-)conical outer surface.

8. Trailing arm according to any one of the claims 2 - 7, wherein the journal portions (7A, 7B) are at least partially hollow.

9. Trailing arm according to any one of the preceding claims, wherein the hammerhead configuration (7) has a width (W1), defined in a direction transverse to the longitudinal axis of the trailing arm, that is at least 10% larger than a width (W2) of the trailing arm portion that adjoins the hammerhead configuration (7).

10. Trailing arm according to any one of the preceding claims, wherein the trailing arm has a necked trailing arm portion (3E) in which the width (W2) of the trailing arm (3) is relatively narrow, said necked trailing arm portion (3E) being located between the portion (3C) where the trailing arm is to be connected to the axle body and the front end portion (3D).

11. Trailing arm according to claim 9, wherein the width (W1) of the hammerhead configuration (7) is smaller than the width of the trailing arm (3) at the portion (3C) where the axle body (4) is to be connected, and wherein the hammerhead configuration (7) is wider than the width (W2) of the trailing arm (3) at the necked trailing arm portion.

12. Trailing arm according to claim 1, wherein the trailing arm has an integrally formed hammerhead configuration.

13. Trailing arm according to any one of the preceding claims, wherein the trailing arm (3) is a flexible trailing arm, wherein the trailing arm (3) has an inherent resiliency and acts as a leaf spring portion between the front end portion (3D) and an axle attachment portion (3C) where the axle body (4) is to be secured to the trailing arm (3).

14. Trailing arm of claim 13, wherein the trailing arm is made in one piece from spring steel.

15. Trailing arm according to any one of the claims 1-13, wherein the trailing arm comprises two parts, which parts are adapted to be clamped together at the axle body (4), securing the axle body (4) in between these two parts.
